# Europäisches Patentamt

## European Patent Office

## Office européen des brevets

(11) Veröffentlichungsnummer: **0 018 584**
**B1**

(12) # EUROPÄISCHE PATENTSCHRIFT

(45) Veröffentlichungstag der Patentschrift:
**15.02.84**

(51) Int. Cl.³: **G 11 B 15/66,** G 11 B 15/29,
G 11 B 23/26

(21) Anmeldenummer: **80102180.9**

(22) Anmeldetag: **23.04.80**

(54) Bandaufzeichnungsträger mit Vorspann, insbesondere Magnetband und Bandrolle.

(30) Priorität: **02.05.79 DE 2917709**

(43) Veröffentlichungstag der Anmeldung:
**12.11.80 Patentblatt 80/23**

(45) Bekanntmachung des Hinweises auf die Patenterteilung:
**15.02.84 Patentblatt 84/7**

(84) Benannte Vertragsstaaten:
**AT BE CH DE FR GB IT LI NL SE**

(56) Entgegenhaltungen:
**FR - A - 2 308 162
US - A - 2 724 436
US - A - 3 694 294
US - A - 3 809 218
US - A - 3 823 947
US - A - 3 827 699
US - A - 3 836 094
US - A - 3 955 777**

(73) Patentinhaber: **BASF Aktiengesellschaft,
Carl-Bosch-Strasse 38, D-6700 Ludwigshafen (DE)**

(72) Erfinder: **Schoettle, Klaus, Ladenburger Strasse 70,
D-6900 Heidelberg (DE)**
Erfinder: **Gliniorz, Lothar, Carl-Bosch-Ring 24,
D-6710 Frankenthal (DE)**

## Bandaufzeichnungsträger mit Vorspann, insbesondere Magnetband und Bandrolle

Die Erfindung betrifft einen Bandaufzeichnungsträger mit Vorspann, insbesondere Magnetband, zum Einfädeln und Herumlegen des Vorspanns um den Umfang eines im wesentlichen zylindrischen Wickelkerns zum Aufwickeln eines Bandwickels darauf und ggf. zum Herumlegen des Vorspanns um den vollaufgewickelten Bandwickel, wobei Vorspann und Aufzeichnungsträger mit den Enden aneinanderstossen, so dass ihre Rückseiten eine ebene Fläche bilden, und die Stossstelle mit einem Klebebandstück überklebt ist, sowie eine Bandrolle. Solch ein Bandaufzeichnungsträger und solch eine Bandrolle sind aus dem US-Patent 3 823 947 bekannt.

Derartige Bandaufzeichnungsträger wie Magnetbänder oder Filme sind von Hand oder selbsttätig in Geräte einfädelbar, so dass der Aufzeichnungsträger selbst geschützt wird.

Mit dem US-Patent 3 823 947 ist eine Vorspann-Aufzeichnungsträger-Verbindung mittels Klebebandstück bekannt, wobei die zu verbindenden Bänder etwa gleich dick sind, was einen Sonderfall darstellt. Die Länge des Klebebandstückes liegt etwa im Bereich mehrerer Bandstärken, so dass eine Unrundheit bei einem Bandwickel unvermeidbar ist.

Es ist auch bekannt, ein biegsames, mit seitlichen Greifzähnen versehenes Vorspannband zu verwenden, dessen Greifzähne mit dem Rand des Wickelkerns in Eingriff kommen und das Vorspannband zur weiteren Aufwicklung auf diese Weise festhalten (US-Patent 3 773 276 und GB-Patent 1 244 539). Dieses bekannte Vorspannband weist die Greifzähne ausserdem auf, um bei den aufgewickelten Bandwickeln durch Über- und Untergreifen der äusseren Bandwindungen zusammenzuhalten. Das Vorspannband hat zu diesem Zweck eine Länge, die dem Umfang des voll aufgewickelten Bandwickels entspricht, wobei die Enden des Vorspannbandes einerseits mit einem Einschnitt und anderseits mit einer in den Einschnitt passenden Spitze ausgebildet ist, um einen im wesentlichen glatten Umfangsrand zu erhalten, so dass die Handhabung des Bandwickels ausserhalb des Gerätes erleichtert ist.

Die Verbindung zwischen Aufzeichnungsträger und Vorspannband erfolgt über Klebung, z.B. wobei der wesentlich dünnere Aufzeichnungsträger in einer Ausnehmung des dickeren Vorspannbandes liegt und so eine ebene Rückseitenfläche gebildet wird. Bei sehr dünnen Bändern ist eine solche Ausnehmung nicht ausreichend genau herstellbar.

Es ist gemäss GB-PS 1 311 225 auch möglich, die Verbindung überlappender Enden eines Magnetbandes und des Vorspannbandes durch Ultraschallverschweissung herzustellen. Auch eine Rippenausbildung in den so verschweissten Enden, wobei die Rippenhöhe in der Grössenordnung der Dicke des Magnetbandes liegt, ist nachteilig.

Um eine Dezentrizität eines Bandwickels zu vermeiden, hat man auch das Ende des Vorspannbandes über eine Länge dem Wickelkernumfang entsprechend abgeschrägt (DE-OS 2 302 777), dabei erhält man jedoch eine nicht glatte Wickelausbildung auf der Umfangsfläche.

Es ist auch eine Magnetband-Vorspannverbindung bekannt (US-Patent 3 955 777), wobei das Vorspannband aus zwei Teilen, einem Teil mit und einem Teil ohne Greifzähne, besteht und die Greifzähne den zahnlosen Vorspannbandteil übergreifen. Das Vorspannband ist mittels Klebeband am Tonband befestigt und besitzt eine Länge, die grösser ist als der Bandwickelumfang, damit das «Selbstübergreifen» überhaupt möglich ist. Eine Unrundheit ist mit diesem Vorspannband nicht zu vermeiden, wenn es um den Wickelkern herumgeschlungen ist, da seine Länge nicht mit dem Kernumfang übereinstimmt.

Es ist Aufgabe der vorliegenden Erfindung, einen Bandaufzeichnungsträger mit Vorspann mit einer optimalen Verbindung auszubilden, wobei eine Unrundheit des aufzuwickelnden oder aufgewickelten Bandwickels weitgehend vermieden werden soll. Die Stossstellen von Vorspannbändern mit wesentlich dünneren Bandaufzeichnungsträgern erzeugen solche Unrundheiten.

Diese Aufgabe wird mit einem Bandaufzeichnungsträger mit Vorspann, insbesondere Magnetband, zum Einfädeln und Herumlegen des Vorspanns um den Umfang eines im wesentlichen zylindrischen Wickelkerns zum Aufwickeln eines Bandwickels darauf und ggf. zum Herumlegen des Vorspanns um den vollaufgewickelten Bandwikkel, wobei der Vorspann und der Aufzeichnungsträger mit den Enden aneinanderstossen, so dass ihre Rückseiten eine ebene Fläche bilden und die Stossstelle mit einem Klebebandstück überklebt ist, erfindungsgemäss gelöst, wenn der Vorspann eine dem Umfang des Wickelkerns entsprechende Länge hat, wenn die Länge des Klebebandstückes der Länge des Vorspanns entspricht, und wenn die Dicke des Klebebandstückes grösser als die Dicke des Aufzeichnungsträgers ist, wobei die Dicke des Vorspanns wesentlich grösser als die Dicke des Aufzeichnungsträgers ist.

Benutzt werden können dabei handelsübliche Klebebänder, so dass eine wirtschaftliche Verbindungsmöglichkeit bereitgestellt wird, die ausserdem in der Herstellung einfach ist.

Es ist auch zweckmässig, wenn die Enden des Klebebandstücks im spitzen Winkel ($\alpha$), insbesondere von 45°, zum Rand des Bandstücks abgeschnitten oder als Spitze/Einschnitt wie der Vorspann selbst ausgebildet sind. Es ist weiter auch vorteilhaft, wenn das Klebebandstück eine elastische, insbesondere eine thermoplastische Klebschicht besitzt.

Zur Schonung des Aufzeichnungsträgers, insbesondere eines dünnen Magnetbandes, ist es auch wichtig, dass die Länge des Klebebandstückes um ca. 2 bis 3 Dicken des Aufzeichnungsträgers kürzer ist als der Umfang des Wickelkerns mit herumgelegtem Vorspann.

Eine vorteilhafte Ausführung einer Bandrolle, bestehend aus einem auf einem im wesentlichen zylindrischen Wickelkern aufgewickelten Aufzeichnungsträger, insbesondere eine Magnetbandrolle, wobei am Anfang und am Ende des Aufzeichnungsträgers je ein Vorspann vorgesehen ist und wobei Vorspann und Aufzeichnungsträger mit den Enden aneinanderstossen, so dass ihre Rückseiten eine ebene Fläche bilden, und die Stossstelle mit einem Klebebandstück überklebt ist, wird im Anspruch 7 beansprucht.

Weitere Einzelheiten sind der folgenden Beschreibung eines in der Zeichnung dargestellten Ausführungsbeispiels der Erfindung entnehmbar.

Es zeigen in der Zeichnung:

Figur 1: eine Aufzeichnungsträger-Vorspann-Verbindungsstelle gemäss der Erfindung in Seitenansicht;

Figur 2: die Verbindungsstelle aus Figur 1 in Draufsicht;

Figur 3: einen Umfangsabschnitt eines Wickelkerns mit Vorspann und Klebebandstück gemäss der Erfindung;

Figur 4: den Abschnitt aus Figur 3 im Aufriss;

Figur 5: die Stossstelle des Vorspanns am Umfangsabschnitt eines Wickelkerns mit Vorspann und Klebebandstück.

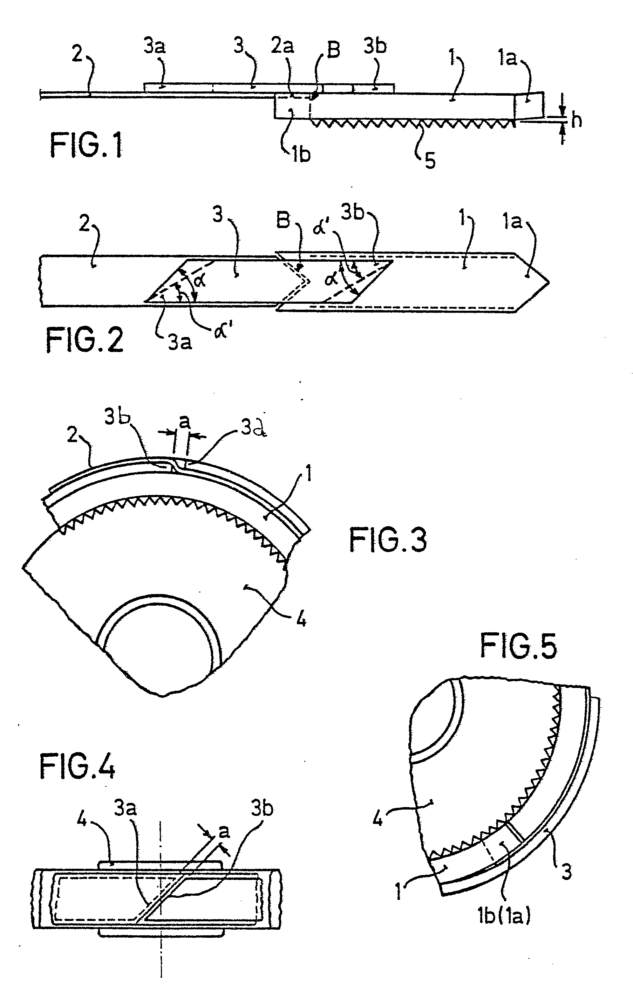

Das Ende 2a eines Aufzeichnungsträgers 2, z.B. eines Magnetbandes mit einer Dicke von weniger als 10 µm, ist als Spitze ausgebildet und liegt in einem Einschnitt 1b eines Vorspanns 1 mit wesentlich grösserer Dicke. Der Vorspann 1 ist mit Greifzähnen 5 zum Umgreifen eines Wickelkerns 4, der in Figuren 3 bis 5 ausschnittsweise dargestellt ist, versehen. Der Wickelkern 4 kann auch der vollgewickelte Kern sein. Die Befestigung des Vorspanns 1 am Wickelkern kann bei nicht vorhandenen Greifzähnen auch auf andere Weise, z. B. durch Adhäsion, Kohäsion, statische Aufladung, Magnetkräfte usw., erfolgen. Über die Stossstelle B des Bandes 2 und des Vorspanns 1 ist auf deren in einer Ebene liegenden Rückseiten ein Klebebandstück geklebt. Wie dargestellt, kann das Klebebandstück 3 spitzwinklig abgeschrägte Enden 3a und 3b besitzen, wobei die Abschrägungen parallellaufen sollen, der Winkel $\alpha$ kann auch 45° betragen oder es kann eine den Vorspannenden 1a und 1b entsprechende Spitze/Einschnitt-Ausführung vorgesehen sein. Ein spitzer Winkel $\alpha'$ ist gestrichelt eingezeichnet.

Das Klebebandstück 3 kann von einem handelsüblichen Klebeband stammen, das vorteilhafterweise schmaler als Band 2 und Vorspann 1 sein sollte und mit einer dauerelastischen, insbesondere einer thermoplastischen Klebschicht versehen sein soll. Das Klebeband 3 ist wesentlich dünner als der Vorspann 1, jedoch wesentlich dicker als das Band 2. Figur 3 zeigt, warum die Länge des Klebebandstücks 3 zweckmässig a = 2 bis 3 Dicken des Bandes 2 kleiner als der Umfang des Wickelkerns 4 sein sollte, denn so wird das Band 2 nicht gequetscht oder irgendwie sonst beschädigt.

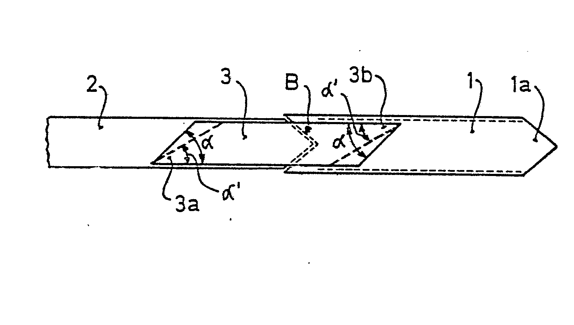

Die Spitze des Vorspanns 1 ist, wie in Figur 1 sichtbar, leicht aufwärts gebogen (Höhe h) dargestellt, um einen automatischen Abschälvorgang in einem Gerät zu ermöglichen. Beim Aufwickeln des Vorspanns 1 auf den Wickelkern fügt besagte Spitze 1a sich in Draufsicht spaltlos in den Einschnitt 1b des Vorspannendes, am Umfang des Wickelkerns entsteht jedoch eine leichte Auswölbung in Radialrichtung entsprechend der Höhe h. Mittels des Klebebandstücks 3 wird, wie in Figur 5 gezeigt, diese Auswölbung jedoch über eine grössere Umfangsstrecke verteilt und somit ausgeglichen.

Die zueinander passenden Endstücke des Vorspanns 1 und des Klebebandstückes 3 haben technisch den Sinn, eine Ungleichmässigkeit am Durchmesser des Wickelkerns so klein wie irgend möglich zu halten, da bei dünnen Magnetbändern sich eine solche Durchmesserungleichmässigkeit durch viele Wickellagen hindurchdrückt und zu Bildstörungen in Videogeräten führen kann.

Im erfindungsgemässen Ausführungsbeispiel ist auch eine Bruchgefahr des Bandes 2 an der Übergangsstelle in Figur 3 sehr herabgesetzt, da das Band die Strecke a gut überwindet und der Dickenunterschied zwischen Band 2 und Klebebandstück 3 nicht annähernd so gross ist wie zwischen Band 2 und Vorspann 1 selbst.

Eine elastische Klebeschicht am Klebebandstück 3 wirkt als nachgiebige Unterlage für die darauf gewickelten Bandwindungen. In Figur 4 längs der Winkelkantenenden 3a und 3b aufgrund des Bandzuges beim Aufwickeln des Bandes 2 auf den Wickelkern im Bandwickel entstehende Scherkraftbeanspruchungen werden durch die Elastizität der Klebeschicht entschärft. Es ist auch vorteilhaft, wenn das Material des Klebebandes selbst ein Thermoplast ist.

Erfindungsgemässe Magnetband-Vorspannverbindungen wurden getestet und ergaben bei Videoaufzeichnungen mit Laufwerken nach dem Kontaktwickelprinzip keine nachteilige Zeitbasisfehlerstörungen.

**Patentansprüche**

1. Bandaufzeichnungsträger mit Vorspann, insbesondere Magnetband (2), zum Einfädeln und Herumlegen des Vorspanns (1) um den Umfang eines im wesentlichen zylindrischen Wickelkerns (4) zum Aufwickeln eines Bandwickels darauf und gegebenenfalls zum Herumlegen des Vorspanns um den voll aufgewickelten Bandwickel, wobei Vorspann (1) und Aufzeichnungsträger (2) mit den Enden aneinanderstossen, so dass ihre Rückseiten eine ebene Fläche bilden, und die Stossstelle (B) mit einem Klebebandstück (3) überklebt ist, dadurch gekennzeichnet, dass der Vorspann (1), wie an sich bekannt, eine dem Umfang des Wickelkerns (4) entsprechende Länge hat, dass ein Klebebandstück (3) verwendet wird, dessen Dicke grösser ist als die Dicke des Aufzeichungsträgers (2) und dessen Länge der Länge des Vorspanns (1) entspricht, wobei die Dicke des Vorspanns wesentlich grösser als die Dicke des Aufzeichnungsträgers ist.

2. Aufzeichnungsträger nach Anspruch 1, dadurch gekennzeichnet, dass der Vorspann (1) am Stossende (1b) einen mittigen Einschnitt aufweist und am freien Ende eine in den Einschnitt passende Ausbildung (1a) hat.

3. Aufzeichnungsträger nach Anspruch 1, dadurch gekennzeichnet, dass die Enden (3a und 3b) des Klebebandstücks im spitzen Winkel (α), insbesondere von 45°, zum Rand des Klebebandstükkes (3) abgeschnitten sind.

4. Aufzeichnungsträger nach Anspruch 1, dadurch gekennzeichnet, dass die Enden des Klebebandstückes (3) einerseits eine mittige Spitze und einen der Spitze formmässig entsprechenden Einschnitt aufweisen.

5. Aufzeichnungsträger nach einem oder mehreren der Ansprüche 1 bis 4, dadurch gekennzeichnet, dass das Klebebandstück (3) eine elastische, insbesondere thermoplastische, Klebeschicht besitzt.

6. Aufzeichnungsträger nach Ansprüchen 1 bis 5, dadurch gekennzeichnet, dass die Länge des Klebebandstückes um ca. 2 bis 3 Dicken (a) des Aufzeichnungsträgers (2) kürzer ist als der Umfang des Wickelkerns (4) mit herumgelegtem Vorspann (1).

7. Bandrolle, bestehend aus einem auf einen im wesentlichen zylindrischen Wickelkern (4) aufgewickelten Aufzeichnungsträger (2), insbesondere eine Magnetbandrolle, wobei am Anfang und am Ende des Aufzeichnungsträgers je ein Vorspann (1) vorgesehen ist und wobei Vorspann und Aufzeichnungsträger mit den Enden aneinanderstossen, so dass ihre Rückseiten eine ebene Fläche bilden, und die Stossstelle (B) mit einem Klebebandstück (3) überklebt ist, dadurch gekennzeichnet, dass jeder Vorspann (1), wie an sich bekannt, eine dem Umfang des Wickelkerns (4) entsprechende Länge aufweist, dass jedes Klebebandstück (3) eine Dicke grösser als die Dicke des Aufzeichnungsträgers (2) und eine Länge, die der Länge des Vorspanns (1) entspricht, aufweist, wobei die Dicke jedes Vorspanns wesentlich grösser als die Dicke des Aufzeichnungsträgers ist.

## Claims

1. A recording tape, in particular a magnetic tape (2), having a leader (1) which is self-threading and wraps smoothly onto the periphery of a substantially cylindrical hub (4) to wind a roll of tape thereon, or onto the fully wound roll of tape, the leader (1) and the recording tape (2) abutting at their ends so that their respective backs form a flat surface, and the butt joint (B) being covered with a piece of splicing tape (3), wherein the leader (1), as is conventional, has a length corresponding to the circumference of the hub (4), and a piece of splicing tape (3) is used whose thickness is greater than that of the recording tape (2), and whose length corresponds to that of the leader (1), the thickness of the leader being much greater than that of the Recording tape.

2. A recording tape as claimed in claim 1, wherein the leader (1) has a central recess at the butt-joint end (1b) and, at its free end, a suitably shaped tip (1a) which fits into the said recess.

3. A recording tape as claimed in claim 1m, wherein the ends (3a and 3b) of the piece of splicing tape are cut at an acute angle (α), in particular at an angle of 45°, to the edge of the piece of splicing tape (3).

4. A recording tape as claimed in claim 1, wherein one end of the piece of splicing tape (3) has a central pointed tip and the other end has a complementary recess for receiving said tip.

5. A recording tape as claimed in one or more of claims 1 to 4, wherein the piece of splicing tape (3) has a resilient adhesive coating, in particular a thermoplastic adhesive coating.

6. A recording tape as claimed in claims 1 to 5, wherein the length of the piece of splicing tape is shorter, by an amount corresponding to about 2–3 thicknesses (a) of the recording tape (2), than the circumference of the hub (4) with the leader (1) wrapped around it.

7. A tape reel comprising a recording tape (2) wound on a substantially cylindrical hub (4), in particular a magnetic tape reel, a leader (1) being provided at the beginning and at the end of the recording tape, the leader and the recording tape abutting at their ends so that their respective backs form a flat surface, and the butt joint (B) being covered with a piece of splicing tape (3), wherein each leader (1), as is conventional, has a length corresponding to the circumference of the hub (4), and each piece of splicing tape (3) has a thickness which is greater than that of the recording tape (2), and a length which corresponds to that of the leader (1), the thickness of each leader being much greater than that of the recording tape.

## Revendications

1. Support d'enregistrement à bande, avec amorce, en particulier bande magnétique (2), pour enfiler et enrouler l'amorce (1) sur la périphérie d'un axe de bobinage (4), en principe cylindrique, pour y enrouler un rouleau de bande, et éventuellement pour enrouler l'amorce sur la bande complètement enroulée, l'amorce (1) et le support d'enregistrement (2) se touchant par leurs extrémités de façon que leurs faces arrière forment une surface plane, et la zône de contact (B) étant recouverte d'un morceau de bande adhésive (3), caractérisé par le fait que l'amorce (1), comme connu en soi, a une longueur correspondant à la périphérie de l'axe de bobinage (4), que le morceau de bande adhésive (3) utilisée a une épaisseur supérieure à celle du support d'enregistrement (2) et une longueur correspondant à celle de l'amorce (1), l'épaisseur de l'amorce étant sensiblement plus grande que celle du support d'enregistrement.

2. Support d'enregistrement selon la revendication 1, caractérisé par le fait que l'amorce (1) présente à l'extrémité de contact (1b) une entaille médiane et possède à l'extrémité libre une forme (1a) s'adaptant à l'entaille.

3. Support d'enregistrement selon la revendication 1, caractérisé par le fait que les extrémités (3a et 3b) du morceau de bande adhésive sont découpées à angle aigu (α), en particulier de 45°, par rapport au bord du morceau de bande adhésive (3).

4. Support d'enregistrement selon la revendication 1, caractérisé par le fait que les extrémités du morceau de bande adhésive (3) possèdent, d'un côté, une pointe médiane et une entaille de forme correspondant à cette pointe.

5. Support d'enregistrement selon l'une quelconque des revendications 1 à 4, caractérisé par le fait que le morceau de bande adhésive (3) possède une couche adhésive élastique, notamment thermoplastique.

6. Support d'enregistrement selon les revendications 1 à 5, caractérisé par le fait que la longueur du morceau de bande adhésive est, par rapport à la périphérie de l'axe d'enroulement (4) entouré de l'amorce (1), plus courte d'environ 2 à 3 épaisseurs (a) du support d'enregistrement (2).

7. Rouleau de bande, constitué d'un support d'enregistrement (2) enroulé sur un axe d'enroulement (4), en principe cylindrique, en particulier un rouleau de bande magnétique, le support d'enregistrement étant pourvu d'une amorce à son début et à sa fin, et l'amorce (1) et le support d'enregistrement (2) se touchant par leurs extrémités, de façon que leurs faces arrière forment une surface plane, et la zône de contact (B) étant recouverte d'un morceau de bande adhésive (3), caractérisé par le fait que chaque amorce (1), comme connu en soi, a une longueur correspondant à la périphérie de l'axe de bobinage (4), que chaque morceau de bande adhésive (3) utilisée a une épaisseur supérieure à celle du support d'enregistrement (2) et une longueur correspondant à celle de l'amorce (1), l'épaisseur de l'amorce étant sensiblement plus grande que celle du support d'enregistrement.

FIG.1

FIG.2

FIG.3

FIG.4

FIG.5